Europäisches Patentamt

European Patent Office

Office européen des brevets

(19)

(11) Publication number: **0 042 015**
**B1**

# EUROPEAN PATENT SPECIFICATION

(12)

(45) Date of publication of patent specification: **13.02.85**

(21) Application number: **80200551.2**

(22) Date of filing: **13.06.80**

(51) Int. Cl.⁴: **B 01 D 35/22** // B01D29/04, F01P11/06

(54) **Filter for particulate matter in fluids and its use in a circuit for liquid coolant.**

(43) Date of publication of application:
**23.12.81 Bulletin 81/51**

(45) Publication of the grant of the patent:
**13.02.85 Bulletin 85/07**

(84) Designated Contracting States:
**DE FR GB IT**

(56) References cited:
**DE-A-2 058 395**
**GB-A-1 110 753**
**GB-A-1 329 905**
**GB-A-1 422 736**
**US-A-3 085 689**
**US-A-3 684 096**

(73) Proprietor: **AUSTIN ROVER GROUP LIMITED**
**Fletchamstead Highway**
**Canley Coventry CV4 9DB (GB)**

(72) Inventor: **Giles, Michael John**
**Mereside Way**
**Olton Nr. Solihull, B92 7BX (GB)**

(74) Representative: **Cundy, Anthony Brian et al**
**Anthony Cundy & Company 384 Station Road**
**Dorridge**
**Solihull West Midlands B93 8ES (GB)**

Courier Press, Leamington Spa, England.

# Description

This invention relates to a filter for removing particulate matter from a fluid, comprising a chamber of substantially circular cross-section with an inlet and an outlet, and filter means situated between the inlet and the outlet.

In the past filters for fluids have commonly suffered from clogging of the filter material by the particulate matter. To extend the service life of filters between cleaning or disposal of the filter material, various methods have been employed for displacing clogging matter, including vibrating the filter, rotating it to remove the matter by centrifugal action, and arranging for the unfiltered fluid to flow across as well as through the filter material.

The present invention provides a filter of the type described above characterised in that the inlet is at the periphery of the chamber and is tangential to the chamber, and in that the outlet is at the periphery of the chamber and is tangential to the chamber, the arrangement being such that fluid entering the inlet and leaving through the outlet creates a vortex within the chamber and particulate matter collects around the centre of the vortex tending to leave at least part of the filter means clear of particulate matter.

Preferred features of the invention are detailed in the dependant claims of the specification.

An embodiment of the invention will now be described by way of example and with reference to the accompanying drawings, in which:—

Figure 1 is a side view of a filter in accordance with the invention with its outer casing shown partly broken away;

Figure 2 is an end view of the filter of Figure 1;

Figure 3 is a cross section through the casing of the filter of Figure 1 taken along the line III—III; and

Figure 4 is a side view of the filter element of the filter of Figure 1.

The drawings show a filter for incorporation in the hot water circuit of a motor vehicle's air-conditioning system. Hitherto the heat exchangers and hot water circuits of vehicle heating systems have tended to clog with swarf and other matter which tends to be left in the vehicle engine after production, and subsequently circulated to the air conditioning unit. It is proposed to incorporate a filter in the air conditioning circuit to prevent such clogging, and whilst it is possible to incorporate a filter as a permanent feature of the air conditioning system, it may frequently be preferred to incorporate a disposable filter which will operate for say the first 1600 km of the vehicle's life, and is then disposed of, having collected the majority of the debris resulting from the manufacturing process.

The filter illustrated comprises a two part plastics casing consisting of two identical injection moulded halves 11 and 12. Each half casing is stiffened by ribs 13 and is sonic-welded to the other half casing around the edges of an annular flange 14 to produce a water tight joint to contain a pressure of about three atmospheres. The annular flanges 14 locate and together retain in place a filter means comprising a circular area of filter material 15 consisting of nylon mesh with apertures of 680 μm, supported by a plastics frame having three equi-spaced arms 16 meeting at a central boss 17 and joined at their radially outer ends by a rim 18. Rim 18 is provided with a pin 19 extending perpendicular to the plane of the mesh 15, which locates in a hole in each of the casing halves 11, 12, to prevent sliding rotation of the filter means within the casing.

Each of the casing halves has a nozzle 20 for connection to a rubber hose to serve as an inlet or outlet for the filter. It will be noted that the nozzles 20 are parallel to each other and point in opposite directions, which facilitates omission of the filter when no longer required, since the two rubber hoses can be joined by a short straight length of pipe.

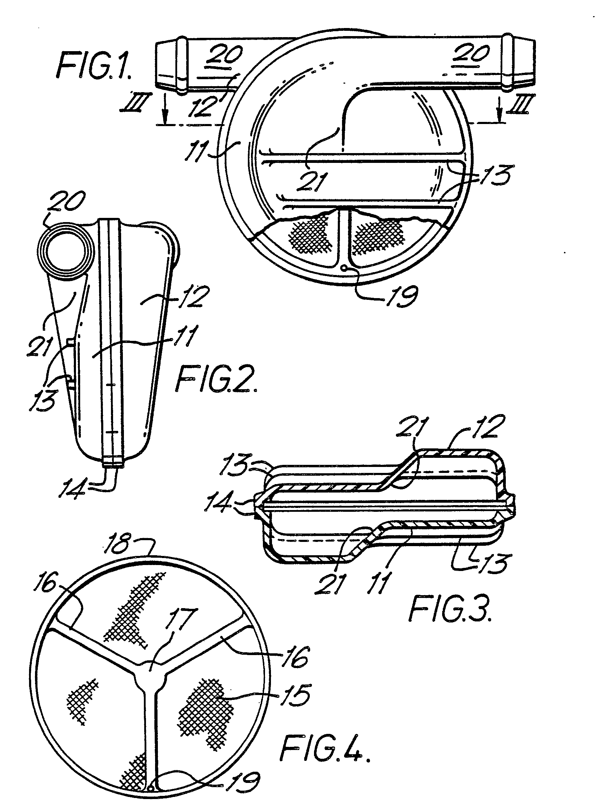

As can be seen particularly from Figures 2 and 3 the greater part of the surface of each casing half is very approximately helical in form. Thus the chamber defined between a casing half and the filter means is so shaped that when cross-sections are taken on radial planes from the centre of the filter means, the maximum cross-sectional area of the chamber occurs where the nozzle 20 connects with the chamber. The chamber area then diminishes gradually as it leads on a circular path away from the nozzle around the centre of the filter means (taking an anti-clockwise path around, say, the nearer chamber viewed in Figure 1), until the path returns to the start where a wall portion 21 of the chamber extends substantially radially to produce an abrupt change in radial cross-sectional area.

In use, water with entrained particulate matter flows into the filter via one of the nozzles 20, entering a chamber defined by the casing half and the filter means, as described above. Due to the tangential entry of water into the chamber and the generally circular cross-section in side view, the water within the chamber is caused to swirl about the centre of the chamber, that is to say about an axis extending through boss 17 perpendicular to the plane of the filter means. Because of the diminishing cross sectional area of the chamber available to the water as it flows in its circular path, the water velocity is substantially maintained despite some water having passed out of the chamber through the nylon mesh 15, which constitutes an outlet into the adjacent chamber formed by the other casing half and the filter means. As some of the water recirculates in the first chamber it passes wall portion 21 which has the effect of a submerged weir, turbulating the recirculating flow. A more significant source of turbulence in the flow is caused by the equi-spaced arms 16 which interrupt flow over the face of the mesh.

The effect of the above flow pattern is thus broadly to establish a vortex in the chamber. The entrained particulate matter which is too large to pass through the mesh is encouraged by the turbulent flow across the face of the filter to continue recirculating in the vortex. The tendency then is for the particulate matter to collect at the centre of the vortex leaving the majority of the filter material radially outward of the centre clear and free to pass water. The rapidity with which the particles move to the centre is increased by the turbulence in the recirculating flow which by breaking down laminar circular flow paths assists transport of the particles to the centre.

Water which has passed through the mesh flows out of the other nozzle 20, filtered of particulate matter.

The filter may be cleaned to an extent, it desired, by removing it from the system and subjecting it to reverse flow, in effect to blow the collected particulate matter out of the 'inlet' nozzle. Of course, if the filter is required to have an indefinite life the two casing halves could be detachably secured together to enable the filter to be dismantled and cleaned, and possibly to have the filter means replaced. This would also enable the mesh size to be varied to enable the filter application to be varied.

As described however, it will be seen that the filter is simple and cheap to manufacture, having few parts with none moving in operation. The filter exhibits very low back-pressure and moreover this is largely maintained over its service life due to the cleaning effect of the vortex which provides the filter with a considerably prolonged life as compared to a linear flow filter.

It will be appreciated that the filter can be modified substantially without departing from the overall concept of the invention. For example the relative orientation of the casing halves could be altered so that the nozzles are non-parallel, or parallel and both facing in the same direction for example, according to mounting requirements. Also while the shape of the casings illustrated is preferred, it could be modified, for example by altering the helical side surfaces so that the chamber is a square-ended cylinder. Also, the filter means could be altered both in its mesh size and its nature for various fluid/matter combinations; for example for removing large particles of matter the whole filter could be enlarged and a pierced metal sheet used for the filter means. Again, whilst the filter is shown located perpendicular to the axis of the vortex, it could be located elsewhere in the wall of the chamber with at least part of its area remote from the centre of the vortex where the particulate matter collects; for example at the outer edge of the vortex.

The illustrated arrangement should, however, be suitable, after due variation of dimensions, for filtering particulate matter at least from most low viscosity fluids such as air, fuel etc.

## Claims

1. A filter for removing particulate matter from a fluid, comprising a chamber of substantially circular cross-section with an inlet (20) and an outlet (20), and filter means (15) situated between the inlet and the outlet, characterised in that the inlet is at the periphery of the chamber and is tangential to the chamber, and in that the outlet is at the periphery of the chamber and is tangential to the chamber, the arrangement being such that fluid entering the inlet and leaving through the outlet creates a vortex within the chamber and particulate matter collects around the centre of the vortex tending to leave at least part of the filter means clear of particulate matter.

2. A filter as claimed in claim 1, characterised in that said filter means (15) is disposed substantially perpendicularly to the principal axis of the vortex.

3. A filter as claimed in claim 1, characterised in that it includes means in said chamber for rendering the fluid flow turbulent.

4. A filter as claimed in any preceding claims, characterised by means for encouraging fluid in said vortex to flow axially of the vortex through said filter means.

5. A filter as claimed in claim 4, characterised in that said means for encouraging axial flow comprises a helical end in said chamber.

6. A filter as claimed in any preceding claim, characterised in that said filter has a casing having two identical halves (11, 12) the chamber defined by said halves being divided by a filter (15) located between the casing halves.

7. A filter as claimed in claim 6, characterised in that said casing halves are plastic mouldings.

8. An internal combustion engine having a circuit for liquid coolant, characterised in that said circuit includes a filter according to any preceding claim.

9. An engine as claimed in claim 8, characterised in that said filter is located in the coolant circuit between the outlet from the engine and a heat exchanger in the circuit.

**Patentansprüche**

1. Filter zum Abscheiden von Feststoffen aus einem Fluid, der eine im Querschnitt im wesentlichen kreisförmige Kammer mit einem Einlaß (20) und einem Auslaß (20) und eine zwischen dem Einlaß und dem Auslaß angeordnete Filtereinrichtung (15) aufweist, dadurch gekennzeichnet, daß der Einlaß am Rand der Kammer und tangential zu der Kammer und daß der Auslaß am Rand der Kammer und tangential zu der Kammer angeordnet ist, derart, daß durch den Einlaß eintretendes und durch den Auslaß austretendes Fluid einen Wirbel in der Kammer erzeugt und die Feststoffe sich um das Zentrum des Wirbels herum sammeln, wobei die Tendenz besteht, daß mindestens ein Teil der Filtereinrichtung frei von Feststoffen bleibt.

2. Filter nach Anspruch 1, dadurch gekennzeichnet, daß die Filtereinrichtung (15) im wesentlichen senkrecht zu der Hauptachse des Wirbels angeordnet ist.

3. Filter nach Anspruch 1, dadurch gekennzeichnet, daß er in der Kammer eine Einrichtung zum Turbulentmachen der Fluidströmung aufweist.

4. Filter nach einem der vorhergehenden Ansprüche, gekennzeichnet durch eine Einrichtung zum Anregen des Fluids in dem Wirbel dazu, daß es axial zu dem Wirbel durch die Filtereinrichtung strömt.

5. Filter nach Anspruch 4, dadurch gekennzeichnet, daß die Einrichtung zum Anregen der Axialströmung ein spiralförmiges Ende in der Kammer aufweist.

6. Filter nach einem der vorhergehendes Ansprüche, dadurch gekennzeichnet, daß der Filter ein Gehäuse mit zwei identischen Hälften (11, 12) hat, wobei die durch die Hälften gebildete Kammer durch einen Filter (15) geteilt ist, der zwischen den Gehäusehälften angeordnet ist.

7. Filter nach Anspruch 6, dadurch gekennzeichnet, daß die Gehäusehälften Formteile aus Kunststoff sind.

8. Verbrennungsmotor mit einem Flüssigkeits-Kühlkreis, dadurch gekennzeichnet, daß der Kühlkreis einen Filter gemäß einem vorhergehenden Anspruch aufweist.

9. Motor nach Anspruch 8, dadurch gekennzeichnet, daß der Filter in dem Kühlkreis zwischen dem Auslaß des Motors und einem Wärmeaustauscher in dem Kühlkreis angeordnet ist.

**Revendications**

1. Un filtre pour éliminer une matière particulaire d'un fluide, qui comporte une chambre ayant une section transversale pratiquement circulaire munie d'un orifice d'entrée (20) et d'un orifice de sortie (20) et de moyens filtrants (15) disposés entre l'orifice d'entrée et l'orifice de sortie, caractérisé en ce que l'orifice d'entrée est situé à la périphérie de la chambre et est tangent à la chambre, et en ce que l'orifice de sortie est situé à la périphérie de la chambre et est tangent à la chambre, l'agencement étant tel que le fluide qui entre par l'orifice d'entrée et sort par l'orifice de sortie crée un tourbillon à l'intérieur de la chambre et que la matière particulaire se rassemble autour du centre du tourbillon, tendant à laisser au moins une partie des moyens filtrants libres de matière particulaire.

2. Un filtre tel que revendiqué à la revendication 1, caractérisé en ce que lesdits moyens filtrants (15) sont disposés à peu près perpendiculairement à l'axe principal du tourbillon.

3. Un filtre tel que revendiqué à la revendication 1, caractérisé en ce qu'il comporte des moyens disposés dans ladite chambre pour rendre turbulent le courant de fluide.

4. Un filtre tel que revendiqué à l'une quelconque des revendications précédentes, caractérisé par des moyens pour favoriser l'écoulement du fluide situé dans ledit tourbillon dans une direction axiale par rapport au tourbillon à travers lesdits moyens filtrants.

5. Un filtre tel que revendiqué à la revendication 4, caractérisé en ce que lesdits moyens servant à favoriser un écoulement axial comprennent une extrémité hélicoïdale de ladite chambre.

6. Un filtre tel que revendiqué à l'une quelconque des revendications précédentes, caractérisé en ce que ledit filtre comporte un boîtier ayant deux moitiés identiques (11, 12), la chambre délimitée par lesdites moitiés étant divisée par un filtre (15) disposé entre les demi-boîtiers.

7. Un filtre tel que revendiqué dans la revendication 6, caractérisé en ce que les demi-boîtiers sont des pièces moulées en matière plastique.

8. Un moteur à combustion interne ayant un circuit pour un liquide de refroidissement, caractérisé en ce que ledit circuit comporte un filtre selon l'une quelconque des revendications précédentes.

9. Un moteur tel que revendiqué à la revendication 8, caractérisé en ce que ledit filtre est disposé dans le circuit de liquide de refroidissement entre l'orifice de sortie du moteur et un échangeur de chaleur monté dans le circuit.

FIG.1.

20    20

III

12

11

21

13

19

20

21

12

11

13

FIG.2.

14

21   12

13

14

13

21  11

FIG.3.

18

16

17

16

15

FIG.4.

19